# EUROPEAN PATENT APPLICATION

(11) **EP 4 831 961 A1**
(43) Date of publication of application: **28.10.2026**
(21) Application number: 26162231.0
(22) Date of filing: 04.03.2026
(51) Int. Cl.: G08G 1/16, B60Q 9/00, B60R 1/00, G06V 20/58, B60W 50/14

(54) **DISPLAY CONTROL DEVICE**

(30) Priority: 23.04.2025 JP 2025071337
(71) Applicant: Toyota Jidosha Kabushiki Kaisha, Toyota-shi, Aichi-ken 471-8571 (JP)
(72) Inventor: MINAMI, Takayuki, Tokyo, 103-0022 (JP)
(74) Representative: D Young & Co LLP

(57) **Abstract**

The display control device displays an icon corresponding to a mobile object near a host vehicle on a display. When the mobile object is another vehicle, the display control unit of the display control device displays another vehicle icon corresponding to the other vehicle on the display based on an average position obtained by taking a moving average of positions of the other vehicle during a past first time width. When the mobile object is a non-vehicle mobile object including any one of a human, an animal, and a bicycle, the display control unit displays a non-vehicle icon corresponding to the non-vehicle mobile object on the display based on a position of the non-vehicle mobile object.

## Description

### CROSS-REFERENCE TO RELATED APPLICATIONS

This application is based upon and claims the benefit of priority from Japanese Patent Application No. 2025-071337, filed on April 23, 2025, the entire contents of which are incorporated herein by reference.

### TECHNICAL FIELD

The present disclosure relates to a display control device for displaying an icon corresponding to a mobile object near a host vehicle on a display.

### BACKGROUND

For example, in Japanese Unexamined Patent Publication No. 2022-121370, a device for displaying a visualized image of a travel environment around a host vehicle recognized by an environment recognition unit on a display is disclosed. This device displays objects corresponding to the host vehicle, other vehicles, and the like arranged in a virtual modeling space.

### SUMMARY

### Problem to be solved by the invention

For example, when mobile objects such as other vehicles in a nearby area are displayed, a position of an icon of another vehicle displayed on a display may be blurred due to a recognition error of a position of the other vehicle in a sensor or the like. To suppress this blurring, a process for suppressing the movement of the icons of other vehicles in a width direction of a travel lane (such as averaging the movement) is performed. However, there are cases where it is not appropriate to uniformly perform this process for suppressing blurring of positions of mobile objects around the host vehicle.

Therefore, the present disclosure describes a display control device that can display an icon corresponding to a mobile object on a display while suppressing blurring of the mobile object.

### Means to solve the problem

A display control device according to an aspect of the present disclosure is [1] "a display control device for displaying an icon corresponding to a mobile object near a host vehicle on a display, the display control device comprising: a mobile object detection unit configured to detect the mobile object near the host vehicle; a type determination unit configured to determine a type of the detected mobile object; and a display control unit configured to display the icon on the display; wherein, when the mobile object is another vehicle, the display control unit displays another vehicle icon corresponding to the other vehicle on the display based on an average position obtained by taking a moving average of positions of the other vehicle during a past first time width, wherein, when the mobile object is a non-vehicle mobile object including any one of a human, an animal, and a bicycle, the display control unit performs at least one of a process for displaying a non-vehicle icon corresponding to the non-vehicle mobile object on the display based on a position of the non-vehicle mobile object and a process for displaying the non-vehicle icon on the display based on an average position obtained by taking a moving average of positions of the non-vehicle mobile object during a past second time width, and wherein the second time width is shorter than the first time width."

This display control device switches the display control for the corresponding icon in accordance with whether the mobile object near the host vehicle is another vehicle or a non-vehicle mobile object such as a human. For example, the other vehicles tend to move along the travel lane. On the other hand, the non-vehicle mobile object such as the human does not necessarily move along the travel lane and often moves regardless of the travel lane. For this reason, when the non-vehicle icon corresponding to the human or the like is displayed on the display, the display control device displays the non-vehicle icon without taking a moving average of the positions of the non-vehicle mobile object or displays the non-vehicle icon based on an average position closer to an actual position obtained by taking a moving average of the positions during the second time width shorter than the first time width. Thereby, the display control device can display the icon corresponding to the mobile object on the display while suppressing the blurring of the icon by taking into account the movement of each type of mobile object.

The above-described display control device may be [2] "the display control device according to the above-described [1], wherein the display control unit shortens the first time width when a movement speed of the other vehicle is higher, compared to when a movement speed of the other vehicle is lower, and wherein the display control unit shortens the second time width when a movement speed of the non-vehicle mobile object is higher, compared to when a movement speed of the non-vehicle mobile object is lower." In this case, when the movement speed of the mobile object is high, the display control device shortens the first time width or the second time width, thereby displaying the icon corresponding to the mobile object (the other vehicle icon or the non-vehicle icon) while suppressing a deviation between the actual position of the mobile object and the position of the icon displayed on the display.

A display control device according to an aspect of the present disclosure is [3] "a display control device for displaying another vehicle icon corresponding to another vehicle near a host vehicle on a display, the display control device comprising: a mobile object detection unit configured to detect the other vehicle near the host vehicle; a lane determination unit configured to determine whether the other vehicle is traveling in a location where a travel lane is clear or in a location where a travel lane is unclear; and a display control unit configured to display the other vehicle icon on the display; wherein, when it is determined that the other vehicle is traveling in the location where the travel lane is clear, the display control unit displays the other vehicle icon on the display based on an average position obtained by taking a moving average of positions of the other vehicle during past time widths different from each other in an extension direction of the travel lane in which the other vehicle is traveling and an intersecting direction intersecting the extension direction, and wherein, when it is determined that the other vehicle is traveling in the location where the travel lane is unclear, the display control unit displays the other vehicle icon on the display based on an average position obtained by taking a moving average of positions of the other vehicle during a past third time width."

For example, when the other vehicle is traveling in the location where the travel lane is clear, it is considered to be moving along the travel lane. On the other hand, when the other vehicle is traveling in the location where the travel lane is unclear (a location where no travel lane is designated), such as at an intersection, it can move in various directions, and its position is therefore easily blurred. For this reason, the display control device can display the other vehicle icon on the display while suppressing blurring of the other vehicle icon by switching the display control for the other vehicle icon in accordance with whether or not the other vehicle is traveling in the location where the travel lane is clear. Here, when the other vehicle is traveling in the location where the travel lane is clear, the display control device can display the other vehicle icon in an aspect suitable for the other vehicle moving along the travel lane by taking a moving average of the other vehicle using the time widths different from each other in the extension direction of the travel lane and the intersecting direction. Moreover, when the other vehicle is traveling in the location where the travel lane is unclear, the display control device can display the other vehicle icon based on an average position closer to its actual position obtained by taking the moving average of the positions of the other vehicle, regardless of a movement direction of the other vehicle and the extension direction of the travel lane. Thereby, the display control device displays an icon corresponding to a mobile object on the display while suppressing icon blurring by taking into account the location where the other vehicle is traveling.

The above-described display control device may be [4] "the display control device according to the above-described [3], wherein the display control unit shortens the third time width when a movement speed of the other vehicle is higher, compared to when a movement speed of the other vehicle is lower." In this case, by shortening the third time width when the movement speed of the other vehicle is higher, the display control device can display the other vehicle icon while suppressing the deviation between the actual position of the other vehicle and the position of the other vehicle icon displayed on the display.

The above-described display control device may be [5] "the display control device according to the above-described [3] or [4], "wherein, when it is determined that the other vehicle is traveling in the location where the travel lane is clear, the display control unit displays the other vehicle icon on the display based on an average position obtained by taking a moving average of positions during a fourth time width in the extension direction of the travel lane in which the other vehicle is traveling and an average position obtained by taking a moving average of positions during a fifth time width in an intersecting direction intersecting the extension direction of the travel lane in which the other vehicle is traveling, and wherein the fourth time width is shorter than a fifth time width." When the other vehicle is traveling in the location where the travel lane is clear, it is considered to be moving along the travel lane. In this case, by lengthening the fifth time width used when taking the moving average in the intersecting direction intersecting the extension direction of the travel lane in which the other vehicle is traveling, it is possible to suppress the deviation in the travel position of the other vehicle in the travel lane in a width direction. Thereby, the display control device can display the other vehicle icon on the display while suppressing the deviation of the travel lane in the width direction in which the other vehicle is traveling.

The above-described display control device may be [6] "the display control device according to the above-described [5], wherein the lane determination unit determines whether or not a lane change is possible in the travel lane in which the other vehicle is traveling, and wherein the display control unit shortens the fifth time width when the other vehicle is traveling in the location where the travel lane is clear and the lane change is possible in the travel lane in which the other vehicle is traveling, compared to when the lane change is impossible in the travel lane." When the travel lane in which the other vehicle is traveling is a travel lane in which the lane change is possible, there is a higher possibility that the other vehicle will change lanes, compared to when the lane change is impossible in the travel lane. For this reason, the display control device shortens the fifth time width when the travel lane in which the other vehicle is traveling is a travel lane in which the lane change is possible. By shortening the fifth time width, the display control device can display the other vehicle icon in the width direction of the travel lane in a state in which it is closer to the actual position (fluctuation) of the other vehicle. In other words, the other vehicle's operation to change lanes can be represented more in real time by the other vehicle icon. Thereby, the display control device can more appropriately indicate that the other vehicle is about to change lanes using an icon of that other vehicle.

### Effects of the Invention

According to various aspects of the present disclosure, it is possible to display an icon corresponding to a mobile object on a display while suppressing blurring of the mobile object.

### BRIEF DESCRIPTION OF THE DRAWINGS

FIG. 1 is a block diagram showing an example of a display control device according to an embodiment.
FIG. 2 is an explanatory schematic plan view of a status of a mobile object near the host vehicle.
FIG. 3 is a diagram showing an example of a display image of an icon displayed on a display.
FIG. 4 is a flowchart showing a flow of an icon display process performed by the display control device.

### DETAILED DESCRIPTION

An exemplary embodiment will be described below with reference to the drawings. In addition, identical or corresponding elements in the drawings are denoted by the same reference signs, and redundant description will be omitted.

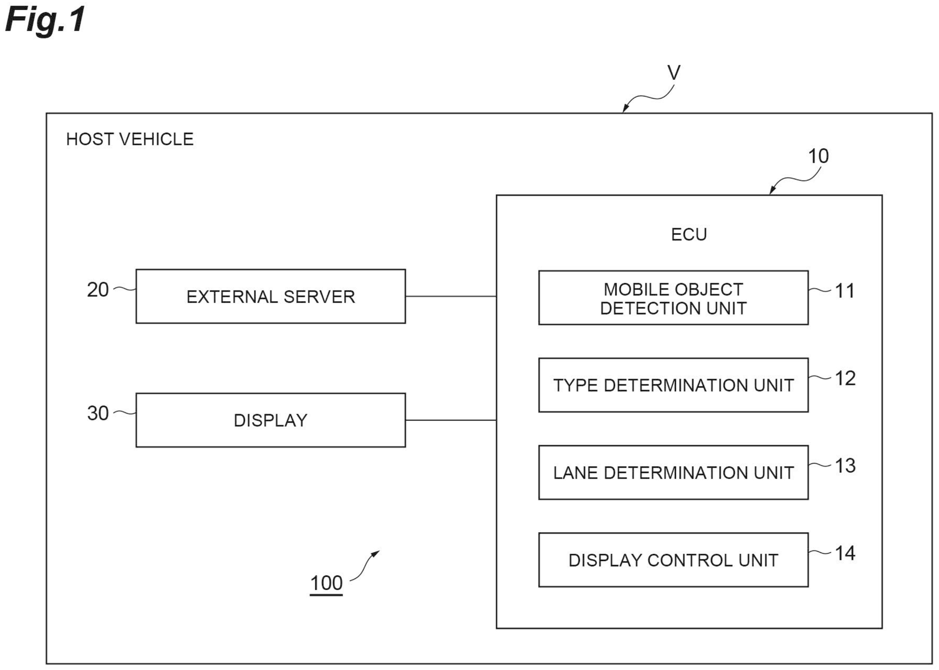

As shown in FIG. 1, a display control device 100 is mounted on a host vehicle V. The display control device 100 displays icons corresponding to mobile objects near the host vehicle V on a display 30. In the present embodiment, mobile objects near the host vehicle V include other vehicles near the host vehicle V and non-vehicle mobile objects other than the other vehicles. The other vehicles are mobile objects powered by a power source such as an engine or an electric motor. The other vehicles include passenger cars, trucks, motorcycles, and the like. The non-vehicle mobile object is a mobile object that does not have a power source such as an engine or electric motor, and is a mobile object other than a vehicle. For example, the non-vehicle mobile object includes any one of a human, an animal, and a bicycle.

The display control device 100 includes an electronic control unit (ECU) 10 that manages the device in an integrated manner. The ECU 10 is an electronic control unit that has a central processing unit (CPU) and a storage unit. The storage unit includes, for example, a read-only memory (ROM), a random-access memory (ROM), an electrically erasable programmable read-only memory (EEPROM), and the like. The ECU 10 implements various types of functions by, for example, executing programs stored in the storage unit with the CPU. The ECU 10 may include a plurality of electronic control units.

An external sensor 20 and the display 30 are connected to the ECU 10. These devices connected to the ECU 10 are mounted on the host vehicle V.

The external sensor 20 is an on-board sensor that detects an external environment of the host vehicle V The external sensor 20 includes at least a camera or a radar sensor. The camera is an imaging device that captures images of the external environment of the host vehicle V. The camera is installed, for example, behind a windshield of the host vehicle V and captures images in front of the vehicle. The camera transmits imaging information about the external environment of the host vehicle V to the ECU 10. The camera may be a monocular camera or a stereo camera. A plurality of cameras may be provided, and may capture images of areas on the left and right sides of the host vehicle V and the like in addition to images of areas in front of the host vehicle V.

The radar sensor is a detection device that detects physical objects near the host vehicle V using radio waves (e.g., millimeter waves) or light. Radar sensors include a light detection and ranging (LIDAR). The LIDAR detects a target by transmitting light to the vicinity of the host vehicle V and receiving light reflected by a physical object. The radar sensor transmits information about the detected external environment of the host vehicle V to the ECU 10.

The display 30 is a display device that visually presents information to a driver of the host vehicle V. The display 30 is provided inside a vehicle cabin of the host vehicle V. The display 30 may be a center display, a multi-information display (MID), or a head-up display (HUD). A type and installation location of the display 30 are not limited as long as it can present information visually. The display 30 displays various types of information in response to control signals from the ECU 10.

Functionally, the ECU 10 includes a mobile object detection unit 11, a type determination unit 12, a lane determination unit 13, and a display control unit 14.

The mobile object detection unit 11 detects mobile objects near the host vehicle V. For example, the periphery of the host vehicle V may be areas in front of and on the sides of the host vehicle V. The periphery of the host vehicle V may also include an area behind the host vehicle V. The mobile object detection unit 11 can detect mobile objects near the host vehicle V based on information about an external environment input from the external sensor 20. As a mobile object detection method to be performed by the mobile object detection unit 11, various well-known methods for detecting mobile objects can be used. For example, the mobile object detection unit 11 may detect mobile objects based on an image captured by a camera provided in the external sensor 20. For example, the mobile object detection unit 11 may detect mobile objects based on detection results of a LIDAR provided in the external sensor 20. For example, the mobile object detection unit 11 acquires a background image based on detection results of the external sensor 20. Also, the mobile object detection unit 11 compares a current image with the background image and calculates a difference. The mobile object detection unit 11 may detect a portion where the difference exceeds a certain threshold as a moving physical object (mobile object).

The type determination unit 12 determines a type of mobile object detected by the mobile object detection unit 11. Here, the type determination unit 12 performs determination by distinguishing other vehicles near the host vehicle V and non-vehicle mobile objects other than the other vehicles as the mobile objects. Moreover, the type determination unit 12 can perform determination by distinguishing, for example, whether the other vehicles are passenger cars, trucks, buses, motorcycles, or the like as the other vehicles near the host vehicle V. For example, the type determination unit 12 can perform determination by distinguishing, for example, whether the non-vehicle mobile object is a human, an animal such as a dog, or a bicycle (a cyclist) as the non-vehicle mobile object.

The type determination unit 12 can classify mobile objects detected by the external sensor 20, for example, using a pre-trained deep learning model. In this case, the type determination unit 12 is caused to learn the type of mobile object (a passenger car, a truck, a bus, a human, an animal, a bicycle, or the like) using a large number of data sets. Also, the type determination unit 12 can analyze the mobile object detected by the mobile object detection unit 11 using the trained model and determine the type of mobile object. In this way, the type determination unit 12 can determine the type of mobile object detected by the mobile object detection unit 11 using various well-known methods.

The lane determination unit 13 determines whether the other vehicle determined by the type determination unit 12 is traveling in a location where the travel lane is clear or in a location where the travel lane is unclear. Here, the location where the travel lane is clear refers to a location where markings (such as white lines and the like) that define the travel lane are marked on a road surface. For example, within intersections, markings that define the travel lane may not be marked on the road surface. In this case, the intersection becomes a location where the travel lane is unclear. In addition to the intersections, other locations where the travel lane is unclear include, for example, parking lots, unpaved roads such as gravel roads, areas where road construction is underway, merging or branching sections of expressways, and the like.

Moreover, the lane determination unit 13 determines whether or not the travel lane in which the other vehicle is traveling is a travel lane where the lane change is possible. In other words, the lane determination unit 13 determines whether the travel lane in which the other vehicle is traveling is a travel lane in which the lane change is possible or a travel lane in which the lane change is prohibited.

The lane determination unit 13 can determine whether or not the travel lane is clear based on detection results of the external sensor 20. In this case, the lane determination unit 13 can determine whether or not a marking is marked on the road surface based on, for example, an image captured by the camera of the external sensor 20, and determine that it is a location where the travel lane is clear when a marking is marked. The lane determination unit 13 may also perform a marking detection process using luminance information and the like, based on the detection results of the LIDAR of the external sensor 20, and determine whether or not a marking is marked on the road surface.

Moreover, the lane determination unit 13 may determine whether or not a marking marked on the road surface is a marking in which the lane change is possible based on an image captured by the camera of the external sensor 20. The lane determination unit 13 can determine whether or not a marking marked on the road surface is a marking in which the lane change is possible based on a shape of the marking (whether the marking is a single solid line, a broken line, or the like) and a color of the marking, based on an image captured by the camera. The lane determination unit 13 may detect the shape of the marking (whether the marking is a single solid line, a broken line, or the like) from luminance information based on the detection results of the LIDAR of the external sensor 20, and determine whether or not the marking marked on the road surface is a marking in which the lane change is possible.

The lane determination unit 13 may determine whether another vehicle is traveling in a location where the travel lane is clear or whether the other vehicle is traveling in a travel lane where the lane change is possible, based on map information. In this case, the map information includes information about the location of the marking that defines the travel lane. The lane determination unit 13 can determine whether another vehicle is traveling in a location where the travel lane is clear or whether the other vehicle is traveling in a travel lane where the lane change is possible, based on position information of the other vehicle determined by the type determination unit 12 and information about the marking included in the map information. In addition, the position information of the other vehicle may be calculated based on, for example, position information of the host vehicle V and a position of the other vehicle relative to the host vehicle V. The lane determination unit 13 can acquire position information about the host vehicle V using various well-known methods, such as using GPS information. The position of the other vehicle relative to the host vehicle V can be calculated by the mobile object detection unit 11 using various well-known methods.

The display control unit 14 displays an icon corresponding to the mobile object (the mobile object near the host vehicle V) detected by the mobile object detection unit 11 on the display 30. The display control unit 14 displays an icon corresponding to the type of mobile object determined by the type determination unit 12 on the display 30.

For example, when the mobile object determined by the type determination unit 12 is another vehicle, the display control unit 14 displays another vehicle icon corresponding to this mobile object (other vehicle) on the display 30. For example, when the mobile object determined by the type determination unit 12 is a passenger car, the display control unit 14 can display an icon of a shape corresponding to a passenger car as the other vehicle icon. Likewise, when the mobile object determined by the type determination unit 12 is a truck or a bus, the display control unit 14 can display an icon of a shape corresponding to a truck or a bus as the other vehicle icon. The display control unit 14 may display a predetermined icon in accordance with the type of other vehicle, such as a passenger car or truck, as the other vehicle icon, or may display an icon generated (selected) based on the detection results of the external sensor 20.

Moreover, for example, when the mobile object determined by the type determination unit 12 is a non-vehicle mobile object, the display control unit 14 displays a non-vehicle icon corresponding to this mobile object (non-vehicle mobile object) on the display 30. For example, when the mobile object determined by the type determination unit 12 is a human, the display control unit 14 can display an icon of a shape corresponding to a human as the non-vehicle icon. Likewise, when the mobile object determined by the type determination unit 12 is an animal or a bicycle, the display control unit 14 can display an icon of a shape corresponding to an animal or a bicycle (a cyclist) as the non-vehicle icon. The display control unit 14 may display predetermined icons in accordance with a type as non-vehicle icons such as a human and an animal or may display icons generated (selected) based on the detection results of the external sensor 20.

When other vehicle icons or non-vehicle icons are displayed, the display control unit 14 can display these icons on the display 30 together with a host vehicle icon corresponding to the host vehicle V. When other vehicle icons or non-vehicle icons are displayed, the display control unit 14 moves a display position of the icon on the display 30 in correspondence with a movement state of the other vehicle or non-vehicle mobile object.

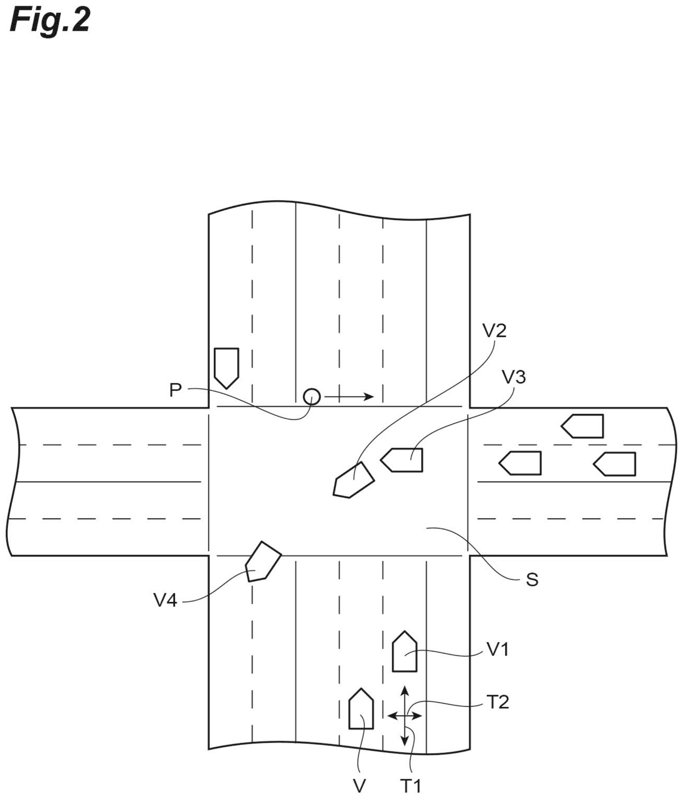

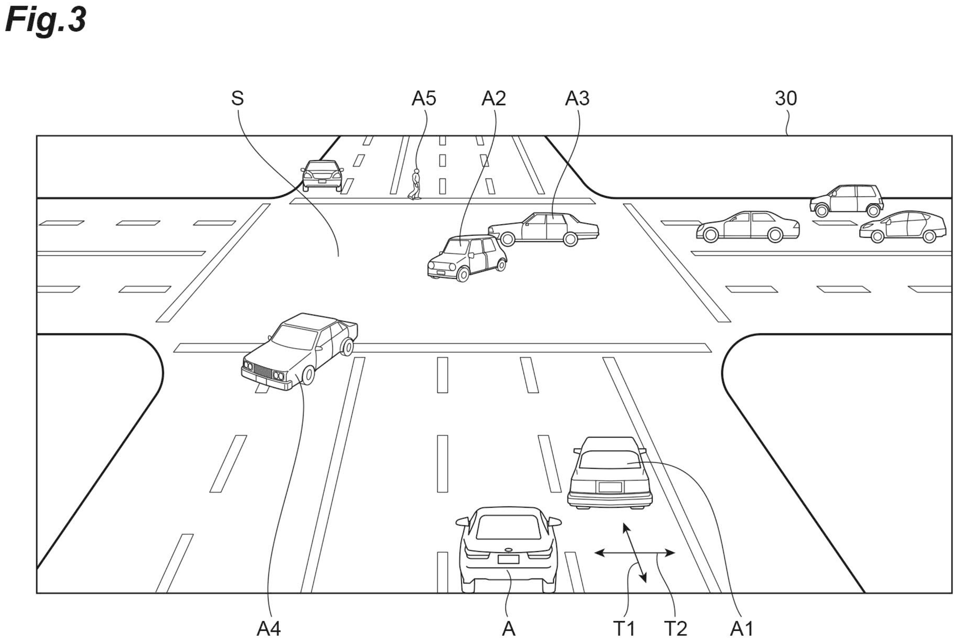

For example, as shown in FIG. 2, it is assumed that another vehicle V1 is traveling in the travel lane on the right side of the travel lane in which the host vehicle V is traveling. It is assumed that this other vehicle V1 is detected by the mobile object detection unit 11 and determined to be the other vehicle by the type determination unit 12. In this case, the display control unit 14 displays another vehicle icon A1 corresponding to the other vehicle V1 on the display screen of the display 30 together with the host vehicle icon A corresponding to the host vehicle V, as shown in FIG. 3.

Here, when the mobile object determined by the type determination unit 12 is another vehicle, the display control unit 14 displays another vehicle icon corresponding to this other vehicle on the display 30 based on an average position obtained by taking a moving average of positions of the other vehicle during a past first time width. The display control unit 14 shortens the first time width used when the movement speed of the moving average of the other vehicle is higher, compared to when the movement speed of the moving average of the other vehicle is lower. As an example, when another vehicle icon A1 corresponding to another vehicle V1 is displayed as shown in FIG. 3, the display control unit 14 displays the other vehicle icon A1 based on an average position obtained by taking a moving average of the positions of the other vehicle V1 during the past first time width.

In addition, the display control unit 14 may change a display aspect of the other vehicle icon in accordance with whether the other vehicle is traveling in a location where the travel lane is clear or in a location where the travel lane is unclear. For example, there is a case where the mobile object determined by the type determination unit 12 is another vehicle, and the lane determination unit 13 determines that this other vehicle is traveling in a location where the travel lane is clear. In this case, the display control unit 14 may display the other vehicle icon on the display 30 based on an average position obtained by taking a moving average of the positions of the other vehicle during past time widths different from each other in the extension direction of the travel lane in which the other vehicle is traveling and in the intersecting direction intersecting the extension direction. This intersecting direction can be a direction perpendicular to the extension direction of the travel lane.

Specifically, for example, as shown in FIG. 2, it is assumed that the other vehicle V1 is traveling in a location where the travel lane is clear. Moreover, the extension direction of the travel lane in which the other vehicle V1 is traveling is defined as an extension direction T1, and the intersecting direction intersecting the extension direction T1 is defined as an intersecting direction T2. In other words, the intersecting direction T2 is a width direction of the travel lane in which the other vehicle V1 is traveling. In this case, the display control unit 14 calculates an average position obtained by taking a moving average of positions of the other vehicle V1 during past time widths different from each other in the extension direction T1 of the travel lane in which the other vehicle V1 is traveling and the intersecting direction T2. Based on the calculated average position, the display control unit 14 displays another vehicle icon A1 corresponding to the other vehicle V1 on the display 30, as shown in FIG. 3.

At this time, the display control unit 14 displays the other vehicle icon A1 on the display 30 based on an average position obtained by taking a moving average of positions during a fourth time width in the extension direction T1 of the travel lane in which the other vehicle V1 is traveling, and an average position obtained by taking a moving average of positions during a fifth time width in the intersecting direction T2 intersecting the extension direction T1 of the travel lane in which the other vehicle V1 is traveling. This fourth time width is shorter than the fifth time width.

Moreover, it is assumed that the lane determination unit 13 determines that the travel lane in which the other vehicle V1 is traveling is one in which a lane change is possible. In this case, the display control unit 14 shortens the fifth time width used when taking the moving average of the other vehicle V1, compared to when the other vehicle V1 is traveling in a travel lane in which a lane change is impossible.

On the other hand, there may be cases where the mobile object determined by the type determination unit 12 is another vehicle, and the lane determination unit 13 determines that this other vehicle is traveling in a location where the travel lane is unclear. In this case, the display control unit 14 may display another vehicle icon on the display 30 based on an average position obtained by taking a moving average of positions of the other vehicle during a past third time width. At this time, the display control unit 14 shortens the third time width used to take the moving average when the movement speed of the other vehicle is higher, compared to when the movement speed of the other vehicle is lower.

Specifically, for example, as shown in FIG. 2, it is assumed that the other vehicle V2 is traveling within an intersection S. In other words, it is assumed that the other vehicle V2 is traveling in a location where the travel lane is unclear. In this case, the display control unit 14 calculates an average position obtained by taking a moving average of positions of the other vehicle V2 during the past third time width. Here, unlike when the other vehicle V2 is traveling in a location where the travel lane is clear, the display control unit 14 calculates an average position by taking a moving average of positions of the other vehicle V2 during the past third time width, without varying the time width used for the moving average according to the direction. Based on the calculated average position, the display control unit 14 displays a vehicle icon A2 corresponding to the other vehicle V2 on the display 30, as shown in FIG. 3. At this time, the display control unit 14 shortens the third time width used to calculate the moving average when the movement speed of the other vehicle V2 is higher, compared to when the movement speed of the other vehicle V2 is lower. As an example, the display control unit 14 may set the third time width to approximately 1 sec when the speed of the other vehicle V2 is 10 km/h, and may set the third time width to approximately 0.5 sec when the speed of the other vehicle V2 is 50 km/h.

In the example shown in FIG. 2, the other vehicle V3 is also traveling within the intersection S. For this reason, the display control unit 14 displays another vehicle icon A3 corresponding to the other vehicle V3 on the display 30 by a method similar to that for the other vehicle V2. Moreover, in the example shown in FIG. 2, the other vehicle V4 is about to exit the intersection S. Like this other vehicle V4, other vehicles moving near the intersection S (other vehicles exiting the intersection S and other vehicles entering the intersection S) may not travel along the travel lane while crossing the travel lane or the like. For this reason, when another vehicle icon corresponding to another vehicle moving near the intersection S (e.g., the other vehicle icon A4 corresponding to the other vehicle V4) is displayed, the display control unit 14 may display the other vehicle icon by a method similar to that for the other vehicle icon A2 corresponding to the other vehicle V2 traveling within the intersection S.

Moreover, when the mobile object determined by the type determination unit 12 is a non-vehicle mobile object, the display control unit 14 displays a non-vehicle icon corresponding to the non-vehicle mobile object on the display 30 based on the position of the non-vehicle mobile object. In other words, in this case, the display control unit 14 displays a non-vehicle icon on the display 30 based on the position of the non-vehicle mobile object without calculating a moving average of the positions of the non-vehicle mobile object. Alternatively, when the mobile object determined by the type determination unit 12 is a non-vehicle mobile object, the display control unit 14 displays a non-vehicle icon on the display based on an average position obtained by calculating a moving average of positions of the non-vehicle mobile object during a past second time width. In other words, in this case, the display control unit 14 displays a non-vehicle icon on the display 30 based on the position obtained by calculating a moving average of the positions of the non-vehicle mobile object. The display control unit 14 shortens the second time width used to take the moving average when the movement speed of the non-vehicle mobile object is higher, compared to when the movement speed of the non-vehicle mobile object is lower.

In addition, the display control unit 14 makes the past second time width used to calculate a moving average of the positions of the non-vehicle mobile object when the mobile object is a non-vehicle mobile object shorter than the past first time width used to calculate a moving average of the positions of the other vehicle when the mobile object is another vehicle. In other words, when the mobile object is a non-vehicle mobile object, the display control unit 14 displays the non-vehicle icon on the display 30 based on a position closer to the actual position of the mobile object (non-vehicle mobile object), compared to when the mobile object is another vehicle. In this way, the display control unit 14 displays the non-vehicle icon on the display 30 so that the movement of the actual moving object (non-vehicle moving object) is reflected more than in the other vehicle icon.

Specifically, for example, as shown in FIG. 2, it is assumed that a pedestrian (human) P is walking (moving) at the position in front of the host vehicle V. In this case, the display control unit 14 displays the non-vehicle icon A5 corresponding to the pedestrian P on the display 30 based on the position of the pedestrian P without calculating a moving average of positions of the pedestrian P. Alternatively, the display control unit 14 displays the non-vehicle icon A5 on the display based on an average position obtained by calculating a moving average of positions of pedestrian P during the past second time width.

In this way, the display control unit 14 changes a display aspect of the icon based on whether the mobile object is another vehicle or a non-vehicle mobile object. Moreover, when the mobile object is another vehicle, the display control unit 14 changes the display aspect of the other vehicle icon in accordance with whether or not the other vehicle is traveling in a location where a travel lane is clear.

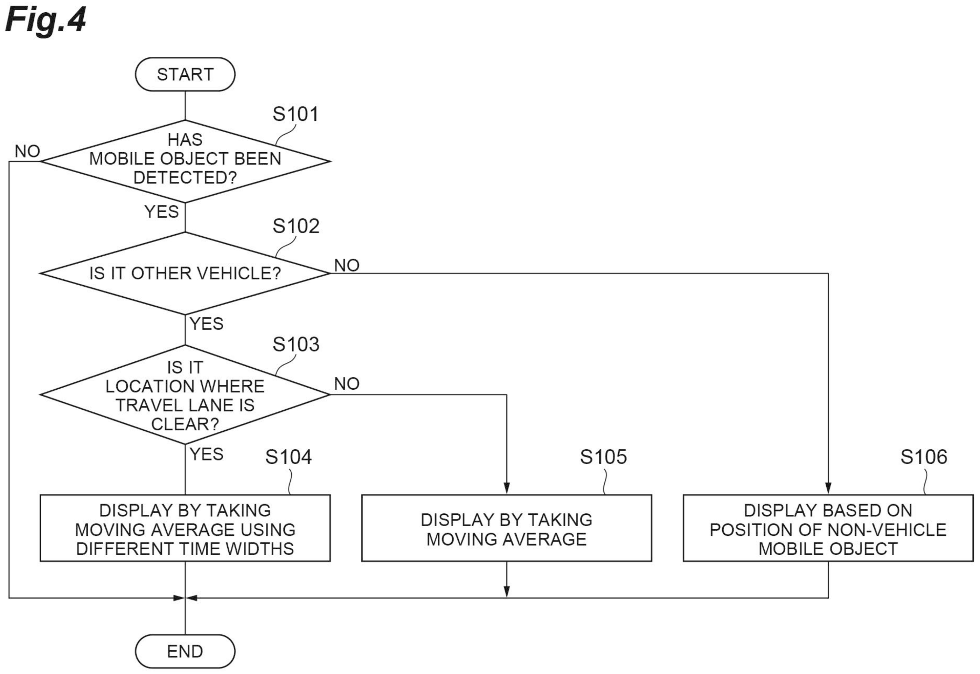

Next, a flow of an icon display process performed by the display control device 100 will be described. In addition, the process shown in FIG. 4 is started, for example, when the host vehicle V starts traveling. Moreover, the process shown in FIG. 4 is started from the start a predetermined time after the processing reaches the end.

As shown in FIG. 4, the mobile object detection unit 11 performs a process for detecting mobile objects near the host vehicle V (S101). When a mobile object has not been detected (S101: NO), the process proceeds to the end. When a mobile object has been detected (S102: YES), the type determination unit 12 determines whether or not the detected mobile object is another vehicle (S102). When the mobile object is another vehicle (S102: YES), the lane determination unit 13 determines whether or not the other vehicle determined by the type determination unit 12 is traveling in a location where the travel lane is clear (S103).

When the other vehicle is traveling in a location with a clear travel lane (S103: YES), the display control unit 14 displays the other vehicle icon on the display 30 using a method for displaying the other vehicle icon A1 corresponding to the other vehicle V1 described with reference to FIGS. 2 and 3. Here, the display control unit 14 calculates an average position by taking a moving average of positions of the other vehicle during past time widths different from each other in the extension direction T1 of the travel lane in which the other vehicle is traveling and the intersecting direction T2 (the fourth time width in the extension direction T1 and the fifth time width in the intersecting direction T2). Also, the display control unit 14 displays the other vehicle icon corresponding to the other vehicle on the display 30 based on the calculated average position (S104).

On the other hand, when another vehicle is traveling in a location where the travel lane is unclear (S103: NO), the display control unit 14 displays the other vehicle icon on the display 30 using a method for displaying the other vehicle icons A2 to A4 corresponding to the other vehicles V2 to V4 described with reference to FIGS. 2 and 3. Here, the display control unit 14 displays the other vehicle icon corresponding to the other vehicle on the display 30 based on an average position obtained by calculating a moving average of the positions of the other vehicle during the past third time width (S105).

When it is determined that the detected mobile object is not another vehicle, i.e., when it is determined that the detected mobile object is a non-vehicle mobile object in the processing of S102 (S102: NO), the display control unit 14 displays the non-vehicle icon on the display 30 using a method for displaying the non-vehicle icon A5 corresponding to the pedestrian P described with reference to FIGS. 2 and 3. Here, the display control unit 14 displays the non-vehicle icon on the display 30 based on the position of the non-vehicle mobile object. Alternatively, the display control unit 14 displays a non-vehicle icon on the display 30 based on an average position obtained by taking a moving average of the positions of the non-vehicle mobile object during the past second time width (S106).

As described above, the display control device 100 switches the display control for the corresponding icon in accordance with whether the mobile object near the host vehicle V is another vehicle or a non-vehicle mobile object such as a human. For example, the other vehicles tend to move along the travel lane. On the other hand, the non-vehicle mobile object such as the human does not necessarily move along the travel lane and often moves regardless of the travel lane. For this reason, when the non-vehicle icon corresponding to the human or the like is displayed on the display, the display control device 100 displays the non-vehicle icon without taking a moving average of the positions of the non-vehicle mobile object (e.g., the non-vehicle icon A5) or displays the non-vehicle icon (e.g., the non-vehicle icon A5) based on an average position closer to an actual position obtained by taking a moving average of the positions during the second time width shorter than the first time width that is used to take a moving average of positions of the other vehicle. Thereby, the display control device 100 can display the icon (one of the other vehicle icons A1 to A4 and the non-vehicle icon A5) corresponding to the mobile object on the display 30 while suppressing the blurring of the icon by taking into account the movement of each type of mobile object.

When the movement speed of the mobile object (the other vehicle or the non-vehicle mobile object) is higher, the display control device 100 shortens the first time width or the second time width, thereby displaying the icon corresponding to the mobile object (the other vehicle icon or the non-vehicle icon) while suppressing a deviation between the actual position of the mobile object and the position of the icon displayed on the display 30.

For example, when another vehicle is traveling in a location where the travel lane is clear, it is considered to be moving along the travel lane. On the other hand, when another vehicle is traveling in a location where the travel lane is unclear, such as in an intersection (a location where no travel lane is marked), it can move in various directions, and its position is therefore easily blurred. For this reason, the display control device 100 can display the other vehicle icon on the display 30 while suppressing blurring of the other vehicle icon by switching the display control for the other vehicle icon in accordance with whether or not the other vehicle is traveling in a location where the travel lane is clear. Here, when another vehicle is traveling in a location where the travel lane is clear, the display control device 100 can display the other vehicle icon (e.g., the other vehicle icon A1) in an aspect suitable for the other vehicle moving along the travel lane by taking a moving average of the other vehicle using time widths different from each other in the extension direction of the travel lane and the intersecting direction. Moreover, when another vehicle is traveling in a location where the travel lane is unclear, the display control device 100 can display the other vehicle icon (e.g., the other vehicle icons A2 to A4) based on an average position closer to the actual position obtained by calculating a moving average of the positions of the other vehicle during the past third time width, regardless of the movement direction of the other vehicle and the extension direction of the travel lane. Thereby, the display control device 100 can display the other vehicle icon corresponding to the other vehicle on the display 30 while suppressing icon blurring by taking into account the location where the other vehicle is traveling.

When another vehicle is traveling in a location where the travel lane is unclear, the display control device 100 changes the third time width used to take a moving average of positions of the other vehicle in accordance with the movement speed of the other vehicle. Here, the display control device 100 shortens the third time width when the movement speed of the other vehicle is higher. Thereby, the display control device 100 can display the other vehicle icon (e.g., the other vehicle icons A2 to A4) while suppressing a deviation between the actual position of the other vehicle and the position of the other vehicle icon displayed on the display 30.

When the other vehicle is traveling in a location where the travel lane is clear, the display control device 100 displays the other vehicle icon (e.g., the other vehicle icon A1) based on an average position obtained by calculating the moving average of the positions of the other vehicle during the fourth time width in the extension direction of the travel lane and an average position obtained by calculating the moving average of the positions of the other vehicle during the fifth time width in the intersecting direction of the travel lane when the moving average of the positions of the other vehicle is taken. Here, when the other vehicle is traveling in the location where the travel lane is clear, it is considered to be moving along the travel lane. In this case, by lengthening the fifth time width used when taking the moving average in the intersecting direction intersecting the extension direction of the travel lane in which the other vehicle is traveling, it is possible to suppress the deviation in the travel position of the other vehicle in the travel lane in a width direction. Thereby, the display control device 100 can display the other vehicle icon (e.g., the other vehicle icon A1) on the display while suppressing the deviation of the travel lane in the width direction in which the other vehicle is traveling.

For example, when the travel lane in which the other vehicle is traveling is a travel lane in which the lane change is possible, there is a higher possibility that the other vehicle will change lanes, compared to when the lane change is impossible in the travel lane. For this reason, if the travel lane in which the other vehicle is traveling is a travel lane in which the lane change is possible, the display control device 100 shortens the fifth time width used when the moving average is taken in the intersecting direction intersecting the extension direction of the travel lane. By shortening the fifth time width, the display control device 100 can display the other vehicle icon (e.g., the other vehicle icon A1) in the width direction of the travel lane in a state in which it is closer to the actual position (fluctuation) of the other vehicle. In other words, the other vehicle's operation to change lanes can be represented more in real time by the other vehicle icon. Thereby, the display control device 100 can more appropriately indicate that the other vehicle is about to change lanes using an icon of that other vehicle.

## Claims

1. A display control device (100) for displaying an icon corresponding to a mobile object near a host vehicle (V) on a display (30), the display control device (100) comprising:
a mobile object detection unit (11) configured to detect the mobile object near the host vehicle (V);
a type determination unit (12) configured to determine a type of the detected mobile object; and
a display control unit (14) configured to display the icon on the display (30);
wherein, when the mobile object is another vehicle (V1-V4), the display control unit (14) displays another vehicle icon (A1-A4) corresponding to the other vehicle on the display (30) based on an average position obtained by taking a moving average of positions of the other vehicle during a past first time width,
wherein, when the mobile object is a non-vehicle mobile object including any one of a human, an animal, and a bicycle, the display control unit (14) performs at least one of a process for displaying a non-vehicle icon (P) corresponding to the non-vehicle mobile object on the display (30) based on a position of the non-vehicle mobile object and a process for displaying the non-vehicle icon (P) on the display (30) based on an average position obtained by taking a moving average of positions of the non-vehicle mobile object during a past second time width, and
wherein the second time width is shorter than the first time width.

2. The display control device (100) according to claim 1,
wherein the display control unit (14) shortens the first time width when a movement speed of the other vehicle is higher, compared to when a movement speed of the other vehicle is lower, and
wherein the display control unit (14) shortens the second time width when a movement speed of the non-vehicle mobile object is higher, compared to when a movement speed of the non-vehicle mobile object is lower.

3. A display control device (100) for displaying another vehicle icon (A1-A4) corresponding to another vehicle (V1-V4) near a host vehicle (V) on a display (30), the display control device (100) comprising:
a mobile object detection unit (11) configured to detect the other vehicle near the host vehicle (V);
a lane determination unit configured to determine whether the other vehicle is traveling in a location where a travel lane is clear or in a location where a travel lane is unclear; and
a display control unit (14) configured to display the other vehicle icon on the display (30);
wherein, when it is determined that the other vehicle is traveling in the location where the travel lane is clear, the display control unit (14) displays the other vehicle icon on the display (30) based on an average position obtained by taking a moving average of positions of the other vehicle during past time widths different from each other in an extension direction of the travel lane in which the other vehicle is traveling and an intersecting direction intersecting the extension direction, and
wherein, when it is determined that the other vehicle is traveling in the location where the travel lane is unclear, the display control unit (14) displays the other vehicle icon on the display (30) based on an average position obtained by taking a moving average of positions of the other vehicle during a past third time width.

4. The display control device (100) according to claim 3, wherein the display control unit (14) shortens the third time width when a movement speed of the other vehicle is higher, compared to when a movement speed of the other vehicle is lower.

5. The display control device (100) according to claim 3 or 4, wherein, when it is determined that the other vehicle is traveling in the location where the travel lane is clear, the display control unit (14) displays the other vehicle icon on the display (30) based on an average position obtained by taking a moving average of positions during a fourth time width in the extension direction of the travel lane in which the other vehicle is traveling and an average position obtained by taking a moving average of positions during a fifth time width in an intersecting direction intersecting the extension direction of the travel lane in which the other vehicle is traveling, and
wherein the fourth time width is shorter than a fifth time width.

6. The display control device (100) according to claim 5,
wherein the lane determination unit determines whether or not a lane change is possible in the travel lane in which the other vehicle is traveling, and
wherein the display control unit (14) shortens the fifth time width when the other vehicle is traveling in the location where the travel lane is clear and the lane change is possible in the travel lane in which the other vehicle is traveling, compared to when the lane change is impossible in the travel lane.
